(19) Europäisches Patentamt
European Patent Office
Office européen des brevets

(11) **EP 3 327 363 B1**

(12) **EUROPEAN PATENT SPECIFICATION**

(45) Date of publication and mention
of the grant of the patent:
**17.06.2020 Bulletin 2020/25**

(51) Int Cl.:
*F24F 3/16* *(2006.01)*       *F24F 130/00* *(2018.01)*
*F24F 11/30* *(2018.01)*

(21) Application number: **17198344.8**

(22) Date of filing: **25.10.2017**

(54) **METHOD AND APPARATUS FOR AIR PURIFICATION**

VERFAHREN UND VORRICHTUNG ZUR LUFTREINIGUNG

PROCÉDÉ ET APPAREIL DE PURIFICATION DE L'AIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2016 CN 201611042676**

(43) Date of publication of application:
**30.05.2018 Bulletin 2018/22**

(73) Proprietors:
• **Beijing Xiaomi Mobile Software Co., Ltd.**
  **Beijing 100085 (CN)**
• **Beijing Smartmi Technology Co., Ltd.**
  **100085 Beijing (CN)**

(72) Inventors:
• **ZHANG, Pengfei**
  **Beijing, Beijing 100085 (CN)**

• **LIU, Tiejun**
  **Beijing, Beijing 100085 (CN)**
• **WU, Ke**
  **Beijing, Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**EP-A1- 2 966 371        WO-A1-2008/152862**
**JP-A- 2008 261 567     US-A1- 2016 245 543**

## Description

### TECHINICAL FIELD

The present disclosure relates to the field of intelligent terminal technology, and more particularly to a method and apparatus for air purification.

### BACKFLOOR

With the development of intelligent equipments, intelligent equipments, such as smart TV, intelligent air conditioner, intelligent refrigerator, smart printer and so on, have become common products of daily life.

At present, there are more and more harmful substances in the air due to industrial pollution, automobile exhaust emissions or the like. Therefore, in order for reducing inhalation of harmful gases or other particles to maintain good health, more and more users use an air purifier which can absorb, decompose or transform various air pollutants and thus effectively improve air cleanliness. With the development of intelligent equipment technology, the air purifier has also become a kind of intelligent equipment with communication ability and computation ability.

The prior art JP2008261567 discloses a control for air purification dependent on the spatial capacity information of the room which is based on an image of the room.

### SUMMARY

The embodiments of the present disclosure provide a method and apparatus for air purification, the solutions of which are discussed as follow.

According to the invention, there is provided a method for air purification, according to appended claim 1.

In some embodiments, the step of acquiring an image of a room to be purified and determining a location at which the image is acquired may include: acquiring the image of the room to be purified by using an incorporated image acquisition device; or acquiring the image of the room to be purified by communication with an apparatus including an image acquisition device, wherein the image of the room to be purified comprises pictures of respective corner points of the room.

In some embodiments, the step of performing air purification for the room to be purified using a purification strategy corresponding to the spatial capacity information may include: deciding a preset purification strategy corresponding to the spatial capacity information of the room to be purified according to a correspondence relationship between preset spatial capacity information for the room to be purified and preset purification strategies; performing the preset purification strategy to achieve air purification of the room to be purified.

In all aspects of the present invention it is possible to use a reference object with known dimensions in order to determine the spatial capacity of the room to be purified. For that purpose, it is possible to place the reference object with known dimensions in a pre-defined or any known distance to the image acquisition device. Further, it is preferred that this reference object is placed at a known distance to a room structure whose dimensions need to be determined, e.g. a wall of the room to be purified, whose width and height need to be determined. Based on the known size of the reference object, its known distance to the image acquisition device and its known distance to the structure whose dimensions need to be determined, it is possible to calculate the dimensions of this structure by using the Pythagorean theorem.

According to a further aspect of the embodiments of the present disclosure, there is provided an apparatus for air purification in a terminal device according to appended claim 4.

According to a further aspect of the embodiments of the present disclosure, there is provided a computer program including instructions for executing the steps of a method for air purification according to any one of the above embodiments when said program is executed by a computer.

According to a further aspect of the embodiments of the present disclosure, there is provided a recording medium readable by a computer and having recorded thereon a computer program including instructions for executing the steps of a method for air purification according to any one of the above embodiments.

The solutions provided by the embodiments of the present disclosure can achieve at least the following beneficial effects.

In the above technical solutions, corresponding space capacity information can be determined according to an image of a room to be purified, so that air purification of the room to be purified can be carried out by a corresponding purification strategy. As thus, a purification strategy can be intelligently adjusted according to spatial capacity of a room to be purified, and thus intelligent performance of an air purifier can be improved.

It is to be understood that both the foregoing general descriptions and the following detailed descriptions are exemplary and explanatory only and do not limit the scope of the disclosure.

## BRIEF DESCRIPTION OF THE DRAWINGS

The drawings herein are incorporated in and constitute a part of this specification, showing embodiments consistent with the present disclosure, and together with the descriptions, serve to explain the principles of the present disclosure.

Figure 1 is a flow chart of a method for air purification according to an exemplary embodiment.
Figure 2 is a schematic representation of corresponding triangles for acquisition of a first distance according to an exemplary embodiment.
Figure 3 is a schematic representation of corresponding triangles for acquisition of a first distance according to an exemplary embodiment.
Figure 4 is a schematic view for determining a floor area of a room to be purified according to an exemplary embodiment.
Figure 5 is a schematic diagram of an apparatus for air purification purifying a room system according to an exemplary embodiment.
Figure 6 is a flow chart of a method for air purification according to an exemplary embodiment.
Figure 7 is a schematic diagram of an apparatus for air purification purifying a room system according to an exemplary embodiment.
Figure 8 is a flow chart of a method for air purification according to an exemplary embodiment.
Figure 9 is a block diagram of an apparatus for air purification according to an exemplary embodiment.
Figure 10 is a block diagram of an apparatus for air purification according to an exemplary embodiment.
Figure 11 is a block diagram of an apparatus for air purification according to an exemplary embodiment.
Figure 12 is a block diagram of an apparatus 1200 for air purification accordance to an exemplary embodiment.

## DETAILED DESCRIPTION

Hereinafter, exemplary embodiments will be described in detail, examples of which are shown in the drawings. In the following descriptions when referring to the drawings, the same numerals in the different drawings denote the same or similar elements unless otherwise indicated. The embodiments described in the following exemplary embodiments are not representative of all embodiments consistent with the present disclosure. Rather, they are merely examples of apparatuses and methods consistent with some aspects of the present disclosure as detailed in the appended claims.

With the technical solution provided by the embodiments of the present disclosure, corresponding space capacity information can be determined according to an image of a room to be purified, so that air purification of the room to be purified can be carried out by a corresponding purification strategy. As thus, a purification strategy can be intelligently adjusted according to spatial capacity of a room to be purified, and thus intelligent performance of an air purifier can be improved.

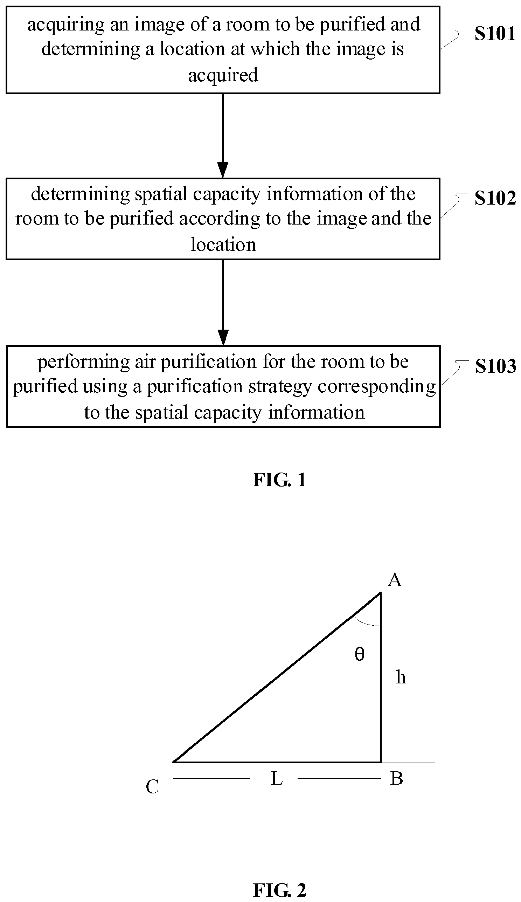

Figure 1 is a flow chart of a method for air purification according to an exemplary embodiment. As shown in Figure 1, the method includes the following steps S101 to S103.

In step S101, an image of a room to be purified is acquired and a location at which the image is acquired is determined.

Here, an apparatus for air purification can obtain the image of the room to be purified. The apparatus for air purification may carry an image acquisition device, such as a camera, whereby the image of the room to be purified can be obtained by the image acquisition device. Alternatively, the apparatus for air purification may communicate with an apparatus carrying an image acquisition device, for example, communicate with a camera mounted at the ceiling of the room, to obtain the image of the room to be purified. It can be seen that the image of the room to be purified can be obtained in a more flexible manner, including acquiring the image of the room to be purified by using an image acquisition device or acquiring the image of the room to be purified by communication with an apparatus including an image acquisition device.

Further, in the present embodiments, it is also necessary to determine the location where the image is acquired. For example, in the case that the image of the room to be purified is acquired by using an incorporated incorporated image acquisition device, the position of the image acquisition device in the apparatus for air purification can be determined. Alternatively, it is possible to determine position of an incorporated distance measuring device in the apparatus for air purification.

In step S102, spatial capacity information of the room to be purified is determined according to the image and the location.

In some embodiments, the image can be identified to determine positions of corner points of the room to be purified, and then, the space capacity information of the room to be purified can be determined based on the positions of the corner points and the location.

In some embodiments, identification of the image to determine positions of the corner points of the room to be purified may include: determining wall intersecting lines within the room to be purified by comparing colors of shadows of respective walls in the image; and determining the positions of the corner points of the room to be purified according to intersection points between every three intersecting lines.

After the positions of the corner points are determined, the spatial capacity information of the room to be purified may be determined based on the positions of the corner points and the location, particularly including: determining a first distance between a projection point of the location on a first plane of the room to be purified and each of the corner points on the first plane, based on the positions of the corner points and said location, wherein the first plane comprises the floor or ceiling of the room to be purified; determining a second distance between every two corner points based on the positions of the corner points; and determining the spatial capacity information of the room to be purified according to the first distance and the second distance.

In some embodiments, the first distance between a projection point of the location on a first plane of the room to be purified and each of the corner points on the first plane may be determined by: determining a first height of the image acquisition device from the first plane of the room to be purified; determining an angle between a first straight line formed by the image acquisition device and a corner point on the first plane and a vertical line to which the image acquisition device corresponds; and performing calculation according to the first height and the angle to obtain the first distance between the projection point of the location on the first plane and the corner point.

Figure 2 is a schematic view showing corresponding triangles for acquisition of a first distance according to an exemplary embodiment. As shown in Figure 2, the image acquisition device is located at a point A, its projection point on the floor of the room to be purified is B, and a corner point is C. Here, the first plane is the floor, so that the corner point is an intersection between a wall and the floor.

In general, the location where the image is acquired is determined (in the example, the installation position of the image acquisition device is known), so it is able to determine a first height of the image acquisition device from the floor of the room to be purified, i.e., the height between A and B, that is the height h. Further, a first straight line is formed by the image acquisition device at the time of image acquisition with the corner point C, and the angle between the first straight line and the vertical line corresponding to the image acquisition device is also known, i.e., the angle $\theta$ between the line AC and the line AB is known. Thus, a first distance between the floor position point and the corner point can be determined, i.e. the first distance of the line BC L = $htg\theta$.

In some embodiments, if the first plane is the ceiling of the room to be purified, the corner point C is an intersection between a wall and the ceiling. The incorporated image acquisition device is located at a point A and its projection point on the ceiling of the room to be purified is B, then the first distance is a distance between the projection point on the ceiling and the corner point. After determining the height h of the image acquisition device from the floor of the room to be purified, a first height (H-h) can be determined based on the height H of the room to be purified, that is, the length of the line AB. Again, the angle $\theta$ between the line AC and the line AB is known. Thus, the first distance between the ceiling position point and the corner point can be determined, i.e. the first distance of the line BC L=(H-h) $tg\theta$.

The height H of the room to be purified may be a preset height or a vertical distance between a corner point on the floor and a corner point on the ceiling.

Alternatively, a first distance between a projection point of the location on a first plane of the room to be purified and each of the corner points on the first plane may be determined by: determining a second height of a distance measuring device from the first plane of the room to be purified; acquiring, by the distance measuring device, a distance regarding a corner point between the distance measuring device and the corner point on the first plane; performing calculation according to the second height and the distance regarding the corner point to obtain the first distance between the projection point of the location on the first plane and the corner point.

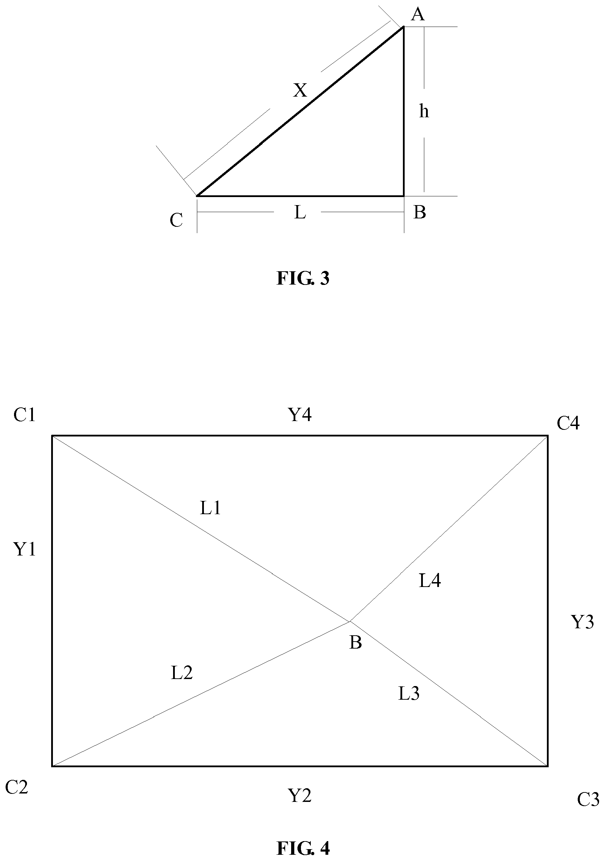

Figure 3 is a schematic diagram showing corresponding triangles for acquisition of a first distance according to an exemplary embodiment. As shown in Figure 3, an incorporated distance measuring device is located at a point A, its projection point on the floor of the room to be purified is B, and a corner point is C. Here, the first plane is the floor, so that the corner point is an intersection between a wall and the floor.

Similarly, the location where the image is acquired is determined (in the example, the installation position of the image acquisition device is known), and it is able to determine a second height of the distance measuring device from the floor of the room to be purified, i.e., the height between A and B, that is the height h. Further, the distance measuring device can make measurement to obtain a distance regarding a corner point between the distance measuring device and the corner point, that is, the length X of the line AC. Thus, a first distance between the floor position point and the corner point can be determined according to the Pythagorean theorem, i.e. the first distance $L = \sqrt{X^2 - h^2}$ .

In some embodiments, if the first plane is the ceiling of the room to be purified, the corner point C is an intersection between a wall and the ceiling. The incorporated distance measuring device is located at a point A and its projection point on the ceiling of the room to be purified is B, then the first distance is a distance between the projection point on the ceiling and the corner point. After determining the height h of the distance measuring device from the floor of the room to be purified, a second distance (H-h) can be determined based on the height H of the room to be purified. Further, the distance measuring device can make measurement to obtain a distance regarding a corner point between the distance measuring device and the corner point, that is, the length X of the line AC. Thus, a first distance between the ceiling position point and the corner point can be determined according to the Pythagorean theorem, i.e. the first distance

$$L = \sqrt{X^2 - (H-h)^2} \ .$$

The height H of the room to be purified may be a preset height or a vertical distance between a corner point on the floor and a corner point on the ceiling.

After the positions of the corner points of the room to be purified and the first distances have been determined, a second distance between every two corner points can be determined from the positions of the corner points and the first distances. For example, in the case that the first plane is the floor, four corner points C1, C2, C3, C4 on the floor have been identified. And the image acquisition device is located at a point A, and its projection point on the floor of the room to be purified is B, and the height of the line AB and the first distance of the lines BC1, BC2, BC3, BC4 have been determined. Thus, according to the Pythagorean theorem for a right angle triangle, the lengths of the lines AC1, AC2, AC3, AC4 can be determined as *L1, L2, L3 and L4,* respectively. In this way, the second distance between every two corner points can be obtained according to the cosine theorem, where the second distance between the corner point C1 and the corner point C2 is the $L = \sqrt{L_1^2 + L_2^2 - 2L_1 L_2 \cos\alpha}$ , $\alpha$ is the angle $\angle$ C1AC2 between the line AC1 and the line AC2.

Since the corner points C1, C2, C3, C4 have been determined separately, $\alpha$ can be determined by the image acquisition device. For example, after the center capturing point of the image acquisition device is aimed at the corner point C1, the image acquisition device is driven to rotate until the center capturing point of the image acquisition device is aimed at the corner point C2. The rotation angle of the image acquisition device can be recorded as the angle $\alpha$. Alternatively, at each time the image acquisition device performs capturing, it rotates from a preset start point, so that a corresponding rotation angle and rotation direction for capturing can be recorded when capturing the corner points C1, C2, C3 and C4, respectively. The rotation angles may be denoted as $\alpha_1$, $\alpha_2$, $\alpha_3$, $\alpha_4$. As thus, a certain operation can be placed on the rotation angles $\alpha_1$, $\alpha_2$ to obtain the angle $\alpha$. If the rotation direction is the same for all capturing, $\alpha = |\alpha_2 - \alpha_1|$.

In some embodiments, if A is the point where the distance measuring device is located, the length of the lines AC1, AC2, AC3 and AC4 can be directly measured, which are *L1, L2, L3* and *L4,* respectively. Likewise, the second distance between corner points can be obtained according to the cosine theorem, where the second distance between the corner point C1 and the corner point C2 is $\sqrt{L_1^2 + L_2^2 - 2L_1 L_2 \cos\alpha}$ , $\alpha$ is the angle $\angle$C1AC2 between the line AC1 and the line AC2.

Likewise, the $\alpha$ can be determined by the rotation angles of the distance measuring device during the measurements. For example, during the measurements, if the distance measurement device is rotated from a set initial position to the position at which the C1 is aimed at, the corresponding measurement angle is $\alpha_1$ and if the distance measurement device is rotated from a set initial position to the position at which the C2 is aimed at, the corresponding measurement angle is $\alpha_2$. As thus, a second distance between the corner points can be obtained according to the cosine theorem, for example, the second distance between the corner point C1 and the corner point C2 is

$$\sqrt{L_1^2 + L_2^2 - 2L_1 L_2 \cos(\alpha_1 + \alpha_2)} \ ,$$ where the rotation direction corresponding $\alpha_1$ is opposite to the rotation direction corresponding $\alpha_2$.

Thus, after determining the first distance and the second distance, the floor area of the room to be purified can be determined based on the first distance and the second distance. Then, the space capacity information of the room can be determined.

Figure 4 is a schematic view for determining a floor area of a room to be purified according to an exemplary embodiment. As shown in Figure 4, the room has four corners C1, C2, C3 and C4, and the floor position point is B. The first distance between the floor position point and each corner has been determined, i.e. the line BC1 has the length, the line BC2 has the length L2f, the line BC3 has the length L3, and the line BC4 has the length L4. The second distance between every two corner points has also been determined, i.e., the line C1C2 has the length Y1, the line C2C3 has the length Y2, the line C3C4 has the length Y3, and the line C4C1 has the length Y4. Thus, according to the first distances and the second distances, the Helen formula can be used to determine the floor area of the room to be purified. Specifically, the area of the triangle BC1C2 is $S1 = \sqrt{P(P-L1)(P-L2)(P-Y1)}$ , where $p = \dfrac{L1 + L2 + Y1}{2}$ . Similarly, the area S2 of the triangle BC2C3, the area S3 of the triangle BC3C4, and the area S4 of the triangle BC4C1 can be determined. Finally, the floor area S of the room to be purified can be determined by adding the areas of the four triangles.

In general, the height of a room is standard, which has a preset value, so that the space capacity information of the room to be purified can be determined according to the floor area S of the room and the preset value. Alternatively, since the second distance between every two corner points is determined, and there two corner points the second distance between which may be the used to determine the height of the room, so that the space capacity information of the room can be determined according to the second distance and the floor area.

In step S103, air purification for the room to be purified is performed using a purification strategy corresponding to the spatial capacity information.

After the spatial capacity information of the room to be purified has been determined, a preset purification strategy corresponding to the spatial capacity information of the room to be purified is decided according to a correspondence relationship between preset spatial capacity information for the room to be purified and preset purification strategies; and the preset purification strategy is performed to achieve air purification of the room to be purified.

For example, a correspondence relationship between preset spatial capacity information for the room to be purified and preset purification strategies is shown as in Table 1.

Table 1

| Spatial Capacity Information | Preset Purification Strategy |
| --- | --- |
| < 20 m$^3$ | Purification Strategy 1: 1$^{st}$ level of power, 1$^{st}$ gear of san speed |
| ≥20 m$^3$, but < 50 m$^3$ | Purification Strategy 2: 1$^{st}$ level of power, 2$^{nd}$ gear of san speed |
| ≥50 m$^3$, but < 80 m$^3$ | Purification Strategy 3: 2$^{nd}$ level of power, 3$^{rd}$ gear of san speed |
| ≥8 m$^3$, but < 100 m$^3$ | Purification Strategy 4: 2$^{nd}$ level of power, 4$^{th}$ gear of san speed |

In this way, when it is determined in step S102 that the space capacity information of the room to be purified includes a capacity of 30 m$^3$, the preset purification strategy may be determined as the Purification Strategy 2 including the first level of power and the second fan speed, according to the relationship of Table 1. As thus, the apparatus for air purification can run with the first level of power and the second gear of fan speed.

It can be seen that different spatial capacity information corresponds to a different air purification strategy, so as to realize intelligent adjustment of purification strategy according to the spatial capacity of the room to be purified, and intelligent performance of the air purifier can be improved.

The operation flow will be summarized below in a specific embodiment, illustrating the method provided by the embodiments of the present disclosure.

In the present embodiment, the apparatus for air purification carries an image acquisition device.

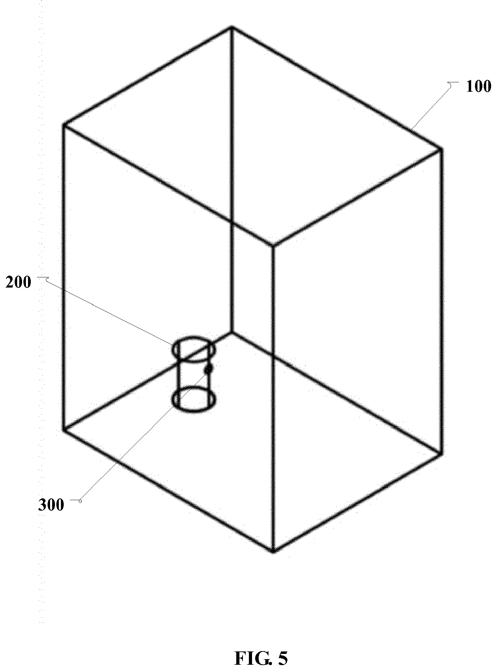

Figure 5 is a schematic diagram of an apparatus for air purification purifying a room system according to an exemplary embodiment. As shown in Figure 5, the system includes a room 100, an air purifier 200, and an image acquisition device 300 mounted on the air purifier. The first plane is the floor of the room 100.

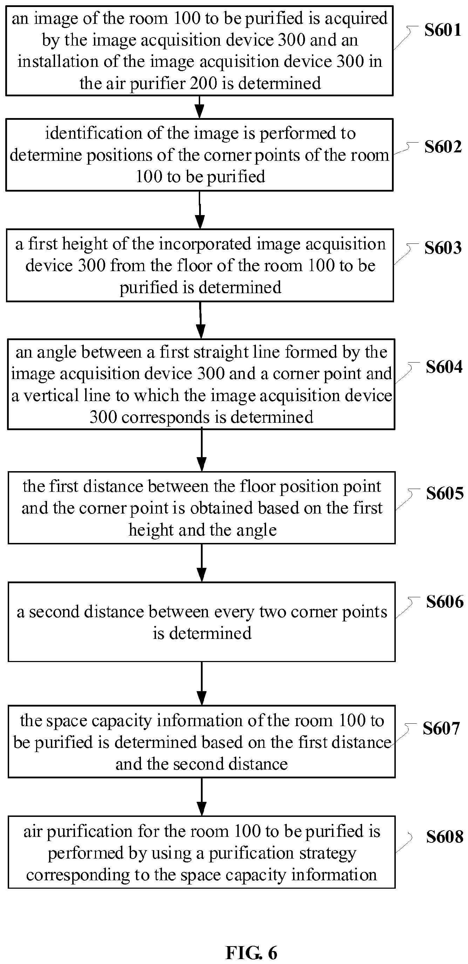

Figure 6 is a flow chart of a method for air purification according to an exemplary embodiment. As shown in Figure 6, the method comprises the following steps S601-S608.

In step S601, an image of the room 100 to be purified is acquired by the image acquisition device 300 and an installation of the image acquisition device 300 in the air purifier 200 is determined.

In step S602, identification of the image is performed to determine positions of the corner points of the room 100 to be purified.

In some embodiments, it can be done by determining wall intersecting lines within the room to be purified by comparing colors of shadows of respective walls in the image; and determining positions of corner points of the room to be purified according to intersection points between every three intersecting lines.

In step S603, a first height of the incorporated image acquisition device 300 from the floor of the room 100 to be purified is determined.

The first height may be determined according to parameters of the installation position of the image acquisition device 300 in the air puffier 200 and the height of the air puffier 200.

In step S604, an angle between a first straight line formed by the image acquisition device 300 and a corner point and a vertical line to which the image acquisition device 300 corresponds is determined.

In step S605, the first distance between the floor position point and the corner point is obtained based on the first height and the angle.

In step S606, a second distance between every two corner points is determined.

In step S607, the space capacity information of the room 100 to be purified is determined based on the first distance and the second distance.

Similarly, the floor area of the room to be purified can be determined firstly based on the first distance and the second distance, and then the space capacity information of the room purified is determined. For example, the space capacity information of the room to be purified can be determined according to the preset height and the floor area of the room to be purified.

In step S608, air purification for the room 100 to be purified is performed by using a purification strategy corresponding to the space capacity information.

Here, this is can be done by deciding a preset purification strategy corresponding to the spatial capacity information of the room to be purified according to a correspondence relationship between preset spatial capacity information for the room to be purified and preset purification strategies; and performing the preset purification strategy to achieve air purification of the room to be purified.

It can be seen that in the present embodiment, corresponding space capacity information can be determined according to an image of a room to be purified, so that air purification of the room to be purified can be carried out by a corresponding purification strategy. As thus, a purification strategy can be intelligently adjusted according to spatial capacity of a room to be purified, and thus intelligent performance of an air purifier can be improved. In addition, by acquiring the image of the room to be purified by using the image acquisition device and determining the first distance between the floor position point and each of the corner points, the present embodiment can be applied to a scene with an incorporated image acquisition device installed.

In another embodiment the apparatus for air purification may include a distance measuring device.

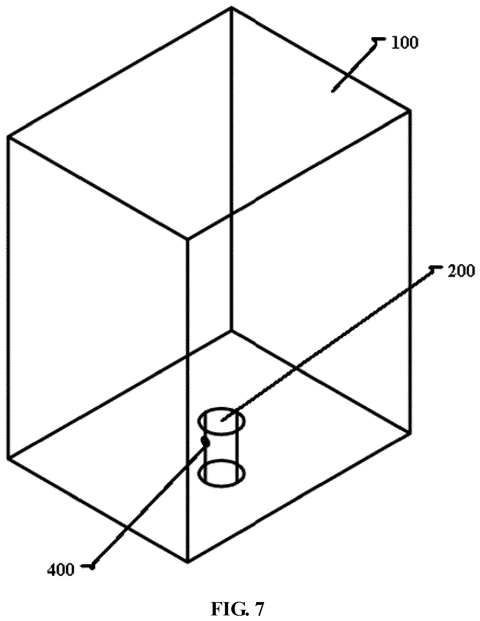

Figure 7 is a schematic diagram of an apparatus for air purification purifying a room system according to an exemplary embodiment. As shown in Figure 7, the system includes a room 100, an air purifier 200, and a distance measuring device 400 mounted on the air purifier. The first plane is the floor of room 100.

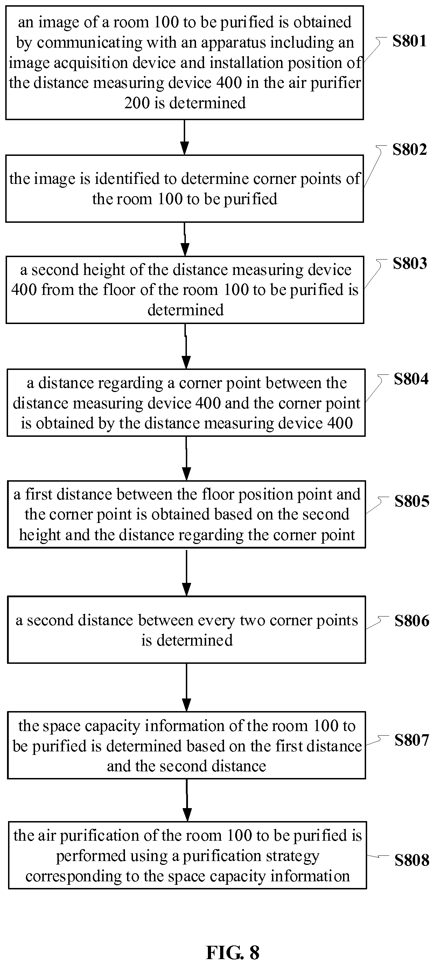

Figure 8 is a flow diagram of a method for air purification according to an exemplary embodiment. As shown in Figure 8, the method includes the following steps S801-S808.

In step S801, an image of a room 100 to be purified is obtained by communicating with an apparatus including an image acquisition device and installation position of the distance measuring device 400 in the air purifier 200 is determined.

In step S802, the image is identified to determine corner points of the room 100 to be purified.

In step S803, a second height of the distance measuring device 400 from the floor of the room 100 to be purified is determined.

The second height may be determined according to the parameters of installation position of the distance measuring device 400 in the air purifier 200 and the height of the air purifier 200.

In step S804, a distance regarding a corner point between the distance measuring device 400 and the corner point is obtained by the distance measuring device 400.

In step S805, a first distance between the floor position point and the corner point is obtained based on the second height and the distance regarding the corner point.

In step S806, a second distance between every two corner points is determined.

In step S807, the space capacity information of the room 100 to be purified is determined based on the first distance and the second distance.

It is possible that the floor area of the room to be purified may be determined firstly according to the first distance and the second distance and then the space capacity information of the room to be purified is determined according to the second distance and the floor area.

In step S808, the air purification of the room 100 to be purified is performed using a purification strategy corresponding to the space capacity information.

It can be seen that in the present embodiment, corresponding space capacity information can be determined according to an image of a room to be purified, so that air purification of the room to be purified can be carried out by a corresponding purification strategy. As thus, a purification strategy can be intelligently adjusted according to spatial capacity of a room to be purified, and thus intelligent performance of an air purifier can be improved. Further, the present embodiment can be applied to a scene with an incorporated distance measuring device installed.

The following is an apparatus embodiment of the present disclosure which may be used to carry out the method embodiments of the present disclosure.

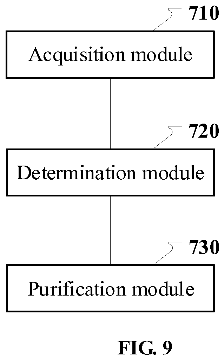

Figure 9 is a block diagram of an apparatus for air purification according to an exemplary embodiment. The apparatus may be implemented as part or all of an electronic device by software, hardware, or a combination of both. As shown in Figure 9, the apparatus for air purification includes an acquisition module 710, a determination module 720, and a purification module 730.

The acquisition module 710 is configured to acquire an image of a room to be purified and determine a location at which the image is acquired.

The determination module 720 is connected to the acquisition module 710 and is configured to determine spatial capacity information of the room to be purified according to the image and the location.

The purification module 730 is connected to the determination module 720 and is configured to perform air purification for the room to be purified using a purification strategy corresponding to the spatial capacity information.

It can be seen that corresponding space capacity information can be determined according to an image of a room to be purified, so that air purification of the room to be purified can be carried out by a corresponding purification strategy. As thus, a purification strategy can be intelligently adjusted according to spatial capacity of a room to be purified, and thus intelligent performance of an air purifier can be improved.

In an embodiment of the present disclosure, the acquisition module 710 may include a first acquisition sub-module or a second acquisition sub-module. The first acquisition sub-module is configured to acquire the image of the room to be purified by the image acquisition device. The second acquisition sub-module is configured to acquire the image of the room to be purified by communication with an apparatus including an image acquisition device. The image of the room to be purified includes pictures of respective corner points of the room.

In the present embodiment, the image of the room to be purified can be acquired in a more flexible manner, so it is simple to implement.

In an embodiment of the present disclosure, the determination module 720 may include: an identification sub-module configured to perform identification of the image to determine positions of the corner points of the room to be purified; a determination sub-module configured to determine the spatial capacity information of the room to be purified in accordance with the position of the corner points and the location.

In the present embodiment, it is possible to determine the corner points of the room to be purified by an image recognition technique so that the corresponding space capacity information can be determined based on the corner points. As thus, the spatial capacity information can be determined by simply analyzing the image, and thereby the speed of air purification can be improved.

In an embodiment of the present disclosure, the identification sub-module may include: a first determination unit configured to determine wall intersecting lines within the room to be purified by comparing colors of shadows of respective walls in the image; and a second determining unit configured to determine the positions of the corner points of the room to be purified according to the intersection points between every three intersecting lines.

In the present embodiment, the wall intersection lines can be determined by simple comparison of the shadows, so the involved arithmetic operations are relatively less and thus occupies relatively smaller memory.

In an embodiment of the present disclosure, the determination sub-module may include: a first distance determination unit configured to determine a first distance between a projection point of the location on a first plane of the room to be purified and each of the corner points on the first plane, based on the positions of the corner points and the location, wherein the first plane includes the floor or ceiling of the room to be purified; a second distance determination unit configured to determine a second distance between every two corner points based on the positions of the corner points; a capacity determination unit configured to determine the spatial capacity information of the room to be purified according to the first distance and the second distance.

In this way, the spatial capacity information can be determined according to areas of the triangles formed by every two corner points and the floor position point based on the first distance and the second distance. Thus, the determination is relatively accurate such that the purification strategy of the air purifier can be more accurately arranged to enhance the purification effect of the air purifier.

In an embodiment of the present disclosure, the first distance determination unit may be further configured to determine a first height of the image acquisition device from the first plane of the room to be purified; determine an angle between a first straight line formed by the image acquisition device and a corner point on the first plane and a vertical line to which the image acquisition device corresponds; perform calculation according to the first height and the angle to obtain the first distance between the projection point of the location on the first plane and the corner point.

In the present embodiment, the distance between the floor position point and the corner point can be obtained according to the height and the angle, and the present embodiment can be applied in a scene with an image acquisition device installed.

In an embodiment of the present disclosure, the first distance determination unit may further be configured to determine a second height of a distance measuring device from the first plane of the room to be purified; acquire, by the distance measuring device, a distance regarding a corner point between the distance measuring device and the corner point on the first plane; perform calculation according to the second height and the distance regarding the corner point to obtain the first distance between the projection point of the location on the first plane and the corner point.

In the present embodiment, the distance between the floor position point and the corner point can be determined by using the two sides of a right-angled triangle, and the present embodiment can be applied in a scene with a distance measuring device installed.

In an embodiment, the purification module 730 may include: strategy decision sub-module configured to decide a preset purification strategy corresponding to the spatial capacity information of the room to be purified according to a correspondence relationship between preset spatial capacity information for the room to be purified and preset purification strategies; and a purification sub-module configured to perform the preset purification strategy to achieve air purification of the room to be purified.

It can be seen that the present embodiment has simple operations and easy to implement by determining and performing a preset purification strategy directly from stored corresponding relationship between preset spatial capacity information for the room to be purified and preset purification strategies.

The apparatus provided in the embodiments of the present disclosure will be described below as an example.

In the present embodiment, the first plane is the floor of the room to be purified.

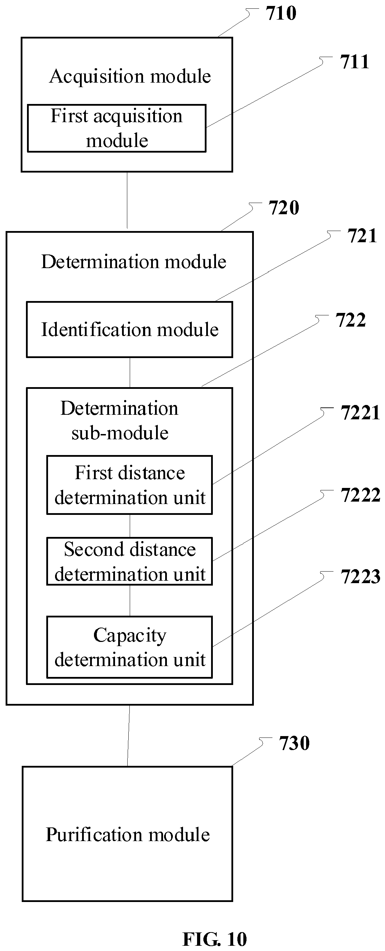

Figure 10 is a block diagram of an apparatus for air purification in accordance with an exemplary embodiment. As shown in Figure 10, the apparatus includes an acquisition module 710, a determination module 720, and a purification module 730. The acquisition module 710 includes a first acquisition sub-module 711. The determination module 720 includes an identification sub-module 721 and a determination sub-module 722. The determination sub-module 722 includes a first distance determination unit 7221, a second distance determination unit 7222, and a capacity determination unit 7223.

In the present embodiment, the first acquisition sub-module 711 in the acquisition module 710 acquires an image of a room to be purified by using an image acquisition device, and the acquisition module 710 determines the location where the image is acquired. The identification sub-module 721 in the determination module 720 can then recognize the image to determine positions of corner points of the room to be purified.

The first distance determination unit 7221 in the determination sub-module 722 of the determination module 720 can determine a first height of the image acquisition device from the floor of the room to be purified, determine an angle between a first straight line formed by the image acquisition device and the corner point and a vertical line to which the image acquisition device corresponds, and then perform calculation based on the first height and the angle to obtain a first distance between the floor position point and the corner point.

The second distance determination unit 7222 can determine a second distance between every two corner points. The, the capacity determination unit 7223 can determine the space capacity information of the room to be purified based on the first distance and the second distance.

In this way, the purification module 730 uses a purification strategy corresponding to the spatial capacity information to perform air purification for the room to be purified.

It can be seen that in the present embodiment, corresponding space capacity information can be determined according to an image of a room to be purified, so that air purification of the room to be purified can be carried out by a corresponding purification strategy. As thus, a purification strategy can be intelligently adjusted according to spatial capacity of a room to be purified, and thus intelligent performance of an air purifier can be improved. In addition, by acquiring the image of the room to be purified using an incorporated image acquisition device and determining the first distance between the floor position point and each of the corner points, the present embodiment can be applied to a scene with an image acquisition device installed.

As another embodiment, the first plane may be the ceiling of the room to be purified.

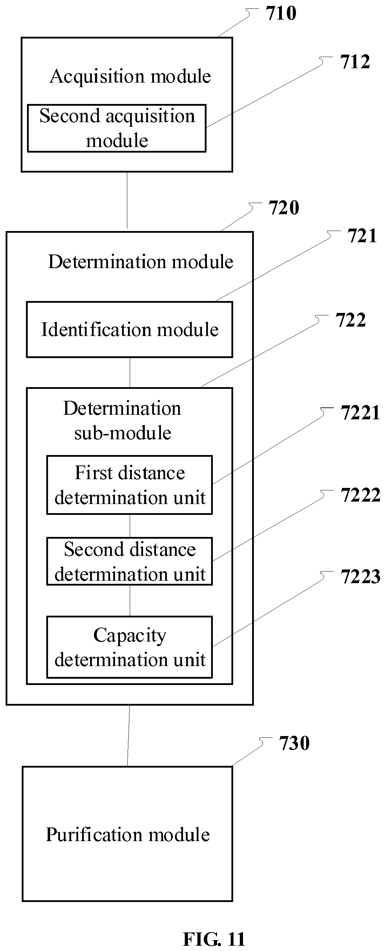

Figure 11 is a block diagram of an apparatus for air purification in accordance with an exemplary embodiment. As shown in Figure 11, the apparatus includes an acquisition module 710, a determination module 720, and a purification module 730. The acquisition module 710 includes a second acquisition sub-module 712. The determination module 720 includes an identification sub-module 721 and a determination sub-module 722. The determination sub-module 722 includes a first distance determination unit 7221, a second distance determination unit 7222, and a capacity determination unit 7223.

In the present embodiment, the second acquisition sub-module 712 in the acquisition module 710 acquires the image of the room to be purified by communication with an apparatus including an image acquisition device, and the acquisition module 710 determines the location where the image is acquired. Then, the identification sub-module 721 in the determination module 720 can recognize the image to determine positions of corner points of the room to be purified.

The first distance determination unit 7221 in the sub-module 722 of the determination module 720 can determine a second height of a distance measuring device to the floor of the room to be purified, acquire, by the distance measuring device, a distance with a corner point between the distance measuring device and the corner point, and perform calculation according to the second height and the distance with the corner point to obtain the first distance between the ceiling position point and the corner point.

The second distance determination unit 7222 can determine a second distance between every two corner points. The capacity determination unit 7223 can then determine the space capacity information of the room to be purified based on the first distance and the second distance.

In this way, the purification module 730 uses a purification strategy corresponding to the spatial capacity information to perform air purification for the room to be purified.

It can be seen that in the present embodiment, corresponding space capacity information can be determined according to an image of a room to be purified, so that air purification of the room to be purified can be carried out by a corresponding purification strategy. As thus, a purification strategy can be intelligently adjusted according to spatial capacity of a room to be purified, and thus intelligent performance of an air purifier can be improved. The present embodiment can be applied to a scene with a distance measuring device installed.

The embodiments of the present disclosure also provide an apparatus for air purification, which may be configured as a server. The apparatus includes: a processor; a memory for storing processor executable instructions, wherein the processor is configured to: acquire an image of a room to be purified and determining a location at which the image is acquired; determine spatial capacity information of the room to be purified according to the image and the location; and perform air purification for the room to be purified using a purification strategy corresponding to the spatial capacity information.

The embodiments provided by the present disclosure may include the following beneficial effects.

In the above technical solutions, corresponding space capacity information can be determined according to an image of a room to be purified, so that air purification of the room to be purified can be carried out by a corresponding purification strategy. As thus, a purification strategy can be intelligently adjusted according to spatial capacity of a room to be purified, and thus intelligent performance of an air purifier can be improved.

With respect to the apparatuses of the above embodiments, the specific mode in which each module performs its operation has been described in detail in the method embodiments, and the descriptions thereof will not be described in detail herein.

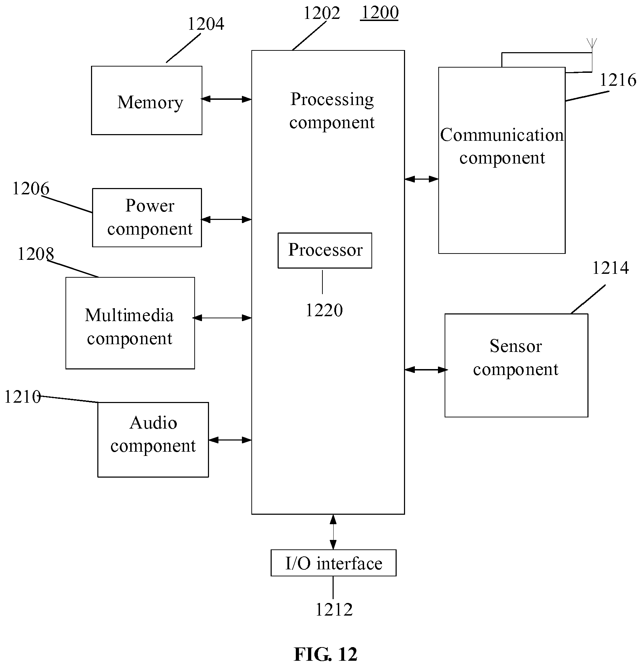

Figure 12 is a block diagram of an apparatus 1200 for air purification in accordance with an exemplary embodiment. The apparatus is suitable for use in a terminal device, and the apparatus can be used in an air purifier. For example, the apparatus 1200 may be a mobile phone, a computer, a digital broadcast terminal, a messaging device, a gaming console, a tablet, a medical device, an exercise equipment, a personal digital assistant, and the like.

Referring to Figure 12, the devicde 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the apparatus 1200. Examples of such data include instructions for any applications or methods operated on the apparatus 1200, contact data, phonebook data, messages, pictures, video, etc. The memory 1204 may be implemented using any type of volatile or non-volatile memory device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may include a power management system, one or more power sources, and any other components associated with the generation, management, and distribution of power for the apparatus 1200.

The multimedia component 1208 includes a screen providing an output interface between the apparatus 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the apparatus 1200 is in an operation mode, such as a photographing mode or a video mode. Each of the front camera and the rear camera may be a fixed optical lens system or have optical focusing and zooming capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, the peripheral interface modules being, for example, a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an open/closed status of the apparatus 1200, relative positioning of components (e.g., the display and the keypad, of the apparatus 1200), a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of a nearby object without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the apparatus 1200 and other apparatus. The apparatus 1200 can access a wireless network based on a communication standard, such as WiFi, 2G, or 3G, or a combination thereof. In an exemplary embodiment, the communication component 1216 receives a broadcast signal or broadcast associated information from an external broadcast management system via a broadcast channel. In an exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing apparatuss (DSPDs), programmable logic apparatuss (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the apparatus 1200, for performing the above-described methods. For example, the non-transitory computer-readable storage medium may be a ROM, a RAM, a CD-ROM, a magnetic tape, a floppy disc, an optical data storage apparatus, and the like.

There is provided a non-transitory computer readable storage medium having stored therein instructions that, when executed by the appratus 1200, cause the appratus 1200 to perform a method as shown in Figure 1. The method includes: acquiring an image of a room to be purified and determining a location at which the image is acquired; determining spatial capacity information of the room to be purified according to the image and the location; and performing air purification for the room to be purified using a purification strategy corresponding to the spatial capacity information.

The step of acquiring an image of a room to be purified and determining a location at which the image is acquired may include: acquiring the image of the room to be purified by using an image acquisition device; or acquiring the image of the room to be purified by communication with an apparatus including an image acquisition device, wherein the image of the room to be purified comprises pictures of respective corner points of the room.

The step of determining spatial capacity information of the room to be purified according to the image and the location may include: performing identification of the image to determine positions of the corner points of the room to be purified; and determining the spatial capacity information of the room to be purified based on the positions of the corner points and the location.

The step of performing identification of the image to determine positions of the corner points of the room to be purified may include: determine wall intersecting lines within the room to be purified by comparing colors of shadows of respective walls in the image; and determining the positions of the corner points of the room to be purified according to intersection points between every three intersecting lines.

The step of determining the spatial capacity information of the room to be purified based on the positions of the corner points and the location may include: determining a first distance between a projection point of the location on a first plane of the room to be purified and each of the corner points on the first plane, based on the positions of the corner points and said location, wherein the first plane comprises the floor or ceiling of the room to be purified; determining a second distance between every two corner points based on the positions of the corner points; and determining the spatial capacity information of the room to be purified according to the first distance and the second distance.

The step of determining a first distance between a projection point of the location on a first plane of the room to be purified and each of the corner points on the first plane may include: determining a first height of the image acquisition device from the first plane of the room to be purified; determining an angle between a first straight line formed by the image acquisition device and a corner point on the first plane and a vertical line to which the image acquisition device corresponds; performing calculation according to the first height and the angle to obtain the first distance between the projection point of the location on the first plane and the corner point.

The step of determining a first distance between a projection point of the location on a first plane of the room to be purified and each of the corner points on the first plane may include: determining a second height of a distance measuring device from the first plane of the room to be purified; acquiring, by the distance measuring device, a distance regarding a corner point between the distance measuring device and the corner point on the first plane; performing calculation according to the second height and the distance regarding the corner point to obtain the first distance between the projection point of the location on the first plane and the corner point.

The step of performing air purification for the room to be purified using a purification strategy corresponding to the spatial capacity information may include: deciding a preset purification strategy corresponding to the spatial capacity information of the room to be purified according to a correspondence relationship between preset spatial capacity information for the room to be purified and preset purification strategies; performing the preset purification strategy to achieve air purification of the room to be purified.

Other embodiments of the present disclosure will be readily apparent to those skilled in the art upon consideration of the specification and practice of the disclosure disclosed herein. The present application is intended to cover any variations, uses, or adaptations of the present disclosure that follow the general principles of the present disclosure and include the common general knowledge or conventional technical means in the art without departing from the present disclosure The specification and examples are to be regarded as illustrative only, and the true scope of the disclosure is indicated by the following claims.

It is to be understood that this disclosure is not limited to the precise constructions described above and shown in the accompanying drawings, and that various modifications and changes may be made without departing from the scope thereof. The scope of the present disclosure is limited only by the appended claims.

**Claims**

1. A method for air purification, **characterized by** comprising:

   acquiring (101) an image of a room to be purified and determining a location at which the image is acquired;
   performing (S602, S802) identification of the image to determine positions of corner points of the room to be purified, wherein said performing identification of the image to determine positions of the corner points of the room to be purified comprises: determining wall intersecting lines within the room to be purified by comparing colors of shadows of respective walls in the image; and determining the positions of the corner points of the room to be purified according to intersection points between every three intersecting lines; determining (102) spatial capacity information of the room to be purified according to the positions of the corner points and the location; and
   performing (103) air purification for the room to be purified using a purification strategy corresponding to the spatial capacity information,
   wherein said determining the spatial capacity information of the room to be purified based on the positions of the corner points and the location comprises:

   determining (S605) a first distance between a projection point of the location on a first plane of the room to be purified and each of the corner points on the first plane, based on the positions of the corner points and said location, wherein the first plane comprises the floor or ceiling of the room to be purified;
   determining (S606, S806) a second distance between every two corner points based on the positions of the corner points; and
   determining (S607, S807) the spatial capacity information of the room to be purified according to the first distance and the second distance,

   wherein said determining the first distance between the projection point of the location on a first plane of the room to be purified and each of the corner points on the first plane comprises:

   determining (S603) a first height of the image acquisition device from the first plane of the room to be purified; determining (S604) an angle between a first straight line formed by the image acquisition device and a corner point on the first plane and a vertical line to which the image acquisition device corresponds; and performing (S605) calculation according to the first height and the angle to obtain the first distance between the projection point of the location on the first plane and the corner point; or
   determining (S803) a second height of a distance measuring device from the first plane of the room to be purified; acquiring (S804), by the distance measuring device, a distance regarding a corner point between the distance measuring device and with corner point on the first plane; and performing (S805) calculation according to the second height and the distance regarding the corner point to obtain the first distance between the projection point of the location on the first plane and the corner point.

2. The method according to claim 1, wherein said acquiring an image of a room to be purified and determining a location at which the image is acquired comprises:

acquiring (S601) the image of the room to be purified by using an image acquisition device; or
acquiring (S601) the image of the room to be purified by communication with an apparatus including an image acquisition device,
wherein the image of the room to be purified comprises pictures of respective corner points of the room.

3. The method according to claim 1, wherein said performing air purification for the room to be purified using a purification strategy corresponding to the spatial capacity information comprises:

deciding (S608, S808) a preset purification strategy corresponding to the spatial capacity information of the room to be purified according to a correspondence relationship between preset spatial capacity information for the room to be purified and preset purification strategies;
performing (S608, S808) the preset purification strategy to achieve air purification of the room to be purified.

4. An apparatus for air purification, **characterized by** comprising:

an acquisition module (710); a determination module (720); and a purification module (730);
the acquisition module (710) is configured to acquire an image of a room to be purified and determine a location at which the image is acquired;
the determination module (720) is connected to the acquisition module (710) and is configured to perform identification of the image to determine positions of corner points of the room to be purified, and determine spatial capacity information of the room to be purified according to the positions of the corner points and the location;
the purification module (730) is connected to the determination module (720) and is configured to perform air purification for the room to be purified using a purification strategy corresponding to the spatial capacity information,
wherein the determination module is configured to: determine wall intersecting lines within the room to be purified by comparing colors of shadows of respective walls in the image; and determine the positions of the corner points of the room to be purified according to intersection points between every three intersecting lines;
wherein the determination module is configured to:

determine a first distance between a projection point of the location on a first plane of the room to be purified and each of the corner points on the first plane, based on the positions of the corner points and said location, wherein the first plane comprises the floor or ceiling of the room to be purified;
determine a second distance between every two corner points based on the positions of the corner points; and
determine the spatial capacity information of the room to be purified according to the first distance and the second distance; and

wherein the determination module is further configured to:

determine a first height of the image acquisition device from the first plane of the room to be purified; determine an angle between a first straight line formed by the image acquisition device and a corner point on the first plane and a vertical line to which the image acquisition device corresponds; and perform calculation according to the first height and the angle to obtain the first distance between the projection point of the location on the first plane and the corner point; or
determine a second height of a distance measuring device from the first plane of the room to be purified; acquire, by the distance measuring device, a distance regarding a corner point between the distance measuring device and with corner point on the first plane; and perform calculation according to the second height and the distance regarding the corner point to obtain the first distance between the projection point of the location on the first plane and the corner point.

5. A computer program including instructions for executing the steps of a method for air purification according to any one of claims 1 to 3 when said program is executed by a computer.

6. A recording medium readable by a computer and having recorded thereon a computer program including instructions for executing the steps of a method for air purification according to any one of claims 1 to 3.

**Patentansprüche**

1. Verfahren zur Luftreinigung, **dadurch gekennzeichnet, dass** es umfasst:

   Aufnehmen (101) eines Bilds eines zu reinigenden Raums und Bestimmen eines Standorts, an dem das Bild aufgenommen wird;
   Durchführen (S602, S802) einer Identifikation des Bilds zum Bestimmen von Positionen von Eckpunkten des zu reinigenden Raums, wobei das Durchführen der Identifikation des Bilds zum Bestimmen von Positionen der Eckpunkte des zu reinigenden Raums umfasst: Bestimmen von Wand-Schnittlinien in dem zu reinigenden Raum durch Vergleichen von Farben von Schatten von jeweiligen Wänden in dem Bild; und Bestimmen der Positionen der Eckpunkte des zu reinigenden Raums gemäß den Schnittpunkten zwischen jeweils drei Schnittlinien; Bestimmen (102) von Informationen über die räumliche Kapazität des zu reinigenden Raums gemäß den Positionen der Eckpunkte und des Standorts; und
   Durchführen (103) einer Luftreinigung für den zu reinigenden Raum unter Anwendung einer Reinigungsstrategie entsprechend den Informationen über die räumliche Kapazität,
   wobei das Bestimmen der Informationen über die räumliche Kapazität des zu reinigenden Raums auf der Basis von Positionen der Eckpunkte und des Standorts umfasst:

      Bestimmen (S605) eines ersten Abstands zwischen einem Projektionspunkt des Standorts auf einer ersten Ebene des zu reinigenden Raums und jedem der Eckpunkte auf der ersten Ebene auf der Basis der Positionen der Eckpunkte und des Standorts, wobei die erste Ebene den Boden oder die Decke des zu reinigenden Raums umfasst;
      Bestimmen (S606, S806) eines zweiten Abstands zwischen jeweils zwei Eckpunkten auf der Basis der Positionen der Eckpunkte; und
      Bestimmen (S607, S807) der Informationen über die räumliche Kapazität des zu reinigenden Raums gemäß dem ersten Abstand und dem zweiten Abstand,

   wobei das Bestimmen des ersten Abstands zwischen dem Projektionspunkt des Standorts auf einer ersten Ebene des zu reinigenden Raums und jedes der Eckpunkte auf der ersten Ebene umfasst:

      Bestimmen (S603) einer ersten Höhe der Bildaufnahmevorrichtung von einer ersten Ebene des zu reinigenden Raums; Bestimmen (S604) eines Winkels zwischen einer ersten von der Bildaufnahmevorrichtung gebildeten geraden Linie und einem Eckpunkt auf der ersten Ebene und einer vertikalen Linie, der die Bildaufnahmevorrichtung entspricht; und Durchführen (S605) einer Berechnung gemäß der ersten Höhe und dem Winkel zum Ermitteln des ersten Abstands zwischen dem Projektionspunkt des Standorts auf der ersten Ebene und dem Eckpunkt; oder
      Bestimmen (S803) einer zweiten Höhe einer Abstandsmessvorrichtung von der ersten Ebene des zu reinigenden Raums; Erfassen (S804), durch die Abstandsmessvorrichtung, eines Abstands bezüglich eines Eckpunkts zwischen der Abstandsmessvorrichtung und mit dem Eckpunkt auf der ersten Ebene; und Durchführen (S805) einer Berechnung gemäß der zweiten Höhe und dem Abstand bezüglich des Eckpunkts zum Ermitteln des ersten Abstands zwischen dem Projektionspunkt des Standorts auf der ersten Ebene und dem Eckpunkt.

2. Verfahren nach Anspruch 1, bei dem das Aufnehmen eines Bilds eines zu reinigenden Raums und das Bestimmen eines Standorts, an dem das Bild aufgenommen wird, umfasst:

   Aufnehmen (S601) des Bilds des zu reinigenden Raums unter Verwendung einer Bildaufnahmevorrichtung; oder
   Aufnehmen (S601) des Bilds des zu reinigenden Raums durch Kommunikation mit einer Einrichtung, die eine Bildaufnahmevorrichtung aufweist,
   wobei das Bild des zu reinigenden Raums Abbildungen von jeweiligen Eckpunkten des Raums aufweist.

3. Verfahren nach Anspruch 1, bei dem das Durchführen einer Luftreinigung für den zu reinigenden Raum unter Anwendung einer Reinigungsstrategie entsprechend den Informationen über die räumliche Kapazität umfasst:

   Entscheiden (S608, S808) über eine voreingestellte Reinigungsstrategie entsprechend den Informationen über die räumliche Kapazität des zu reinigenden Raums gemäß einer Entsprechungsbeziehung zwischen den Informationen über die voreingestellte räumliche Kapazität für den zu reinigenden Raum und die voreingestellten Reinigungsstrategien;

Durchführen (S608, S808) der voreingestellten Reinigungsstrategie zum Erreichen einer Luftreinigung des zu reinigenden Raums.

4. Vorrichtung zur Luftreinigung, **dadurch gekennzeichnet, dass** sie aufweist:

ein Aufnahmemodul (710), ein Bestimmungsmodul (720) und ein Reinigungsmodul (730);
wobei das Aufnahmemodul (710) derart ausgebildet ist, dass es ein Bild eines zu reinigenden Raums aufnimmt und einen Standort, an dem das Bild aufgenommen wird, bestimmt;
wobei das Bestimmungsmodul (720) mit dem Aufnahmemodul (710) verbunden ist und derart ausgebildet ist, dass es eine Identifikation des Bilds zum Bestimmen von Positionen von Eckpunkten des zu reinigenden Raums durchführt und Informationen über die räumliche Kapazität des zu reinigenden Raums gemäß den Positionen der Eckpunkte und des Standorts bestimmt;
wobei das Reinigungsmodul (730) mit dem Bestimmungsmodul (720) verbunden ist und derart ausgebildet ist, dass es eine Luftreinigung für den zu reinigenden Raum unter Anwendung einer Reinigungsstrategie entsprechend den Informationen über die räumliche Kapazität durchführt,
wobei das Bestimmungsmodul ausgebildet ist zum: Bestimmen von Wand-Schnittlinien in dem zu reinigenden Raum durch Vergleichen von Farben von Schatten von jeweiligen Wänden in dem Bild; und Bestimmen der Positionen der Eckpunkte des zu reinigenden Raums gemäß den Schnittpunkten zwischen jeweils drei Schnittlinien;
wobei das Bestimmungsmodul ausgebildet ist zum:

Bestimmen eines ersten Abstands zwischen einem Projektionspunkt des Standorts auf einer ersten Ebene des zu reinigenden Raums und jedem der Eckpunkte auf der ersten Ebene auf der Basis der Positionen der Eckpunkte und des Standorts, wobei die erste Ebene den Boden oder die Decke des zu reinigenden Raums umfasst;
Bestimmen eines zweiten Abstands zwischen jeweils zwei Eckpunkten auf der Basis der Positionen der Eckpunkte; und
Bestimmen der Informationen über die räumliche Kapazität des zu reinigenden Raums gemäß dem ersten Abstand und dem zweiten Abstand; und

wobei das Bestimmungsmodul ferner ausgebildet ist zum:

Bestimmen einer ersten Höhe der Bildaufnahmevorrichtung von einer ersten Ebene des zu reinigenden Raums; Bestimmen eines Winkels zwischen einer ersten von der Bildaufnahmevorrichtung gebildeten geraden Linie und einem Eckpunkt auf der ersten Ebene und einer vertikalen Linie, der die Bildaufnahmevorrichtung entspricht; und Durchführen einer Berechnung gemäß der ersten Höhe und dem Winkel zum Ermitteln des ersten Abstands zwischen dem Projektionspunkt des Standorts auf der ersten Ebene und dem Eckpunkt; oder
Bestimmen einer zweiten Höhe einer Abstandsmessvorrichtung von der ersten Ebene des zu reinigenden Raums; Erfassen, durch die Abstandsmessvorrichtung, eines Abstands bezüglich eines Eckpunkts zwischen der Abstandsmessvorrichtung und mit dem Eckpunkt auf der ersten Ebene; und Durchführen einer Berechnung gemäß der zweiten Höhe und dem Abstand bezüglich des Eckpunkts zum Ermitteln des ersten Abstands zwischen dem Projektionspunkt des Standorts auf der ersten Ebene und dem Eckpunkt.

5. Computerprogramm, das Anweisungen zum Durchführen der Schritte des Verfahrens zur Luftreinigung nach einem der Ansprüche 1 bis 3, wenn das Programm von einem Computer ausgeführt wird, aufweist.

6. Aufzeichnungsmedium, das von einem Computer lesbar ist und auf dem ein Computerprogramm aufgezeichnet ist, das Anweisungen zum Durchführen der Schritte des Verfahrens zur Luftreinigung nach einem der Ansprüche 1 bis 3 aufweist.

**Revendications**

1. Procédé de purification d'air, **caractérisé en ce qu'**il comprend le fait de:

acquérir (101) une image d'un local à purifier et déterminer un emplacement auquel est acquise l'image;
effectuer (S602, S802) l'identification de l'image pour déterminer les positions des points de coin du local à purifier, où ladite réalisation de l'identification de l'image pour déterminer les positions des points de coin du local à purifier comprend le fait de: déterminer les lignes d'intersection de mur à l'intérieur du local à purifier en comparant les couleurs des ombres des murs respectifs dans l'image; et déterminer les positions des points de coin du local à purifier selon les points d'intersection entre chaque fois trois lignes d'intersection; déterminer (102) les informations de capacité spatiale du local à purifier selon les positions des points de coin et l'emplacement; et

effectuer (103) une purification d'air pour le local à purifier à l'aide d'une stratégie de purification correspondant aux informations de capacité spatiale,

dans lequel ladite détermination des informations de capacité spatiale du local à purifier sur base des positions des points de coin et de l'emplacement comprend le fait de:

déterminer (S605) une première distance entre un point de projection de l'emplacement sur un premier plan du local à purifier et chacun des points de coin sur le premier plan, sur base des positions des points de coin et dudit emplacement, où le premier le plan comprend le plancher ou le plafond du local à purifier; déterminer (S606, S806) une deuxième distance entre chaque fois deux points de coin sur base des positions des points de coin; et déterminer (S607, S807) les informations de capacité spatiale du local à purifier selon la première distance et la deuxième distance,

dans lequel ladite détermination de la première distance entre le point de projection de l'emplacement sur un premier plan du local à purifier et chacun des points de coin sur le premier plan comprend le fait de:

déterminer (S603) une première hauteur du dispositif d'acquisition d'image par rapport au premier plan du local à purifier; déterminer (S604) un angle entre une première ligne droite formée par le dispositif d'acquisition d'image et un point de coin sur le premier plan et une ligne verticale à laquelle correspond le dispositif d'acquisition d'image; et effectuer (S605) un calcul selon la première hauteur et l'angle pour obtenir la première distance entre le point de projection de l'emplacement sur le premier plan et le point de coin; ou déterminer (S803) une deuxième hauteur d'un dispositif de mesure de distance par rapport au premier plan du local à purifier; acquérir (S804), par le dispositif de mesure de distance, une distance concernant un point de coin entre le dispositif de mesure de distance et par rapport à un point de coin sur le premier plan; et effectuer (S805) un calcul selon la deuxième hauteur et la distance concernant le point de coin pour obtenir la première distance entre le point de projection de l'emplacement sur le premier plan et le point de coin.

2. Procédé selon la revendication 1, dans lequel ladite acquisition d'une image d'un local à purifier et la détermination d'un emplacement auquel est acquise l'image comprend le fait de:

acquérir (S601) l'image du local à purifier à l'aide d'un dispositif d'acquisition d'image; ou acquérir (S601) l'image du local à purifier par communication avec un appareil comportant un dispositif d'acquisition d'image,

dans lequel l'image du local à purifier comprend des images des points de coin respectifs du local.

3. Procédé selon la revendication 1, dans lequel ladite réalisation de la purification d'air pour le local à purifier à l'aide d'une stratégie de purification correspondant aux informations de capacité spatiale comprend le fait de:

décider (S608, S808) une stratégie de purification préétablie correspondant aux informations de capacité spatiale du local à purifier selon un rapport de correspondance entre les informations de capacité spatiale préétablies pour le local à purifier et les stratégies de purification préétablies; effectuer (S608, S808) la stratégie de purification préétablie pour obtenir une purification d'air du local à purifier.

4. Appareil de purification d'air, **caractérisé par le fait qu'**il comprend:

un module d'acquisition (710); un module de détermination (720); et un module de purification (730); le module d'acquisition (710) est configuré pour acquérir une image d'un local à purifier et pour déterminer un emplacement auquel est acquise l'image; le module de détermination (720) est connecté au module d'acquisition (710) et est configuré pour effectuer l'identification de l'image pour déterminer les positions des points de coin du local à purifier, et pour déterminer les informations de capacité spatiale du local à purifier selon les positions des points de coin et l'emplacement;

le module de purification (730) est connecté au module de détermination (720) et est configuré pour effectuer une purification d'air pour le local à purifier à l'aide d'une stratégie de purification correspondant aux informations de capacité spatiale,

dans lequel le module de détermination est configuré pour: déterminer les lignes d'intersection de mur à l'intérieur du local à purifier en comparant les couleurs des ombres des murs respectifs dans l'image; et déterminer les positions des points de coin du local à purifier selon les points d'intersection entre chaque fois trois lignes d'intersection;

dans lequel le module de détermination est configuré pour:

déterminer une première distance entre un point de projection de l'emplacement sur un premier plan du local à purifier et chacun des points de coin sur le premier plan, sur base des positions des points de coin et dudit emplacement, où le premier plan comprend le plancher ou le plafond du local à purifier; déterminer une deuxième distance entre chaque fois deux points de coin sur base des positions des points de coin; et

déterminer les informations de capacité spatiale du local à purifier selon la première distance et la deuxième distance; et

dans lequel le module de détermination est par ailleurs configuré pour:

déterminer une première hauteur du dispositif d'acquisition d'images par rapport au premier plan du local à purifier; déterminer un angle entre une première ligne droite formée par le dispositif d'acquisition d'image et un point de coin sur le premier plan et une ligne verticale à laquelle correspond le dispositif d'acquisition d'image; et effectuer un calcul selon la première hauteur et l'angle pour obtenir la première distance entre le point de projection de l'emplacement sur le premier plan et le point de coin; ou

déterminer une deuxième hauteur d'un appareil de mesure de distance par rapport au premier plan du local à purifier; acquérir, par le dispositif de mesure de distance, une distance concernant un point de coin entre le dispositif de mesure de distance et par rapport à un point de coin sur le premier plan; et effectuer un calcul selon la deuxième hauteur et la distance concernant le point de coin pour obtenir la première distance entre le point de projection de l'emplacement sur le premier plan et le point de coin.

5. Programme d'ordinateur comportant des instructions pour réaliser les étapes d'un procédé de purification d'air selon l'une quelconque des revendications 1 à 3 lorsque ledit programme est exécuté par un ordinateur.

6. Support d'enregistrement lisible par un ordinateur et présentant, y enregistré, un programme d'ordinateur comportant les instructions pour réaliser les étapes d'un procédé de purification d'air selon l'une quelconque des revendications 1 à 3.

| acquiring an image of a room to be purified and determining a location at which the image is acquired | S101 |
|---|---|

| determining spatial capacity information of the room to be purified according to the image and the location | S102 |
|---|---|

| performing air purification for the room to be purified using a purification strategy corresponding to the spatial capacity information | S103 |
|---|---|

**FIG. 1**

**FIG. 2**

**FIG. 3**

**FIG. 4**

**FIG. 5**

an image of the room 100 to be purified is acquired by the image acquisition device 300 and an installation of the image acquisition device 300 in the air purifier 200 is determined —⌐ **S601**

↓

identification of the image is performed to determine positions of the corner points of the room 100 to be purified —⌐ **S602**

↓

a first height of the incorporated image acquisition device 300 from the floor of the room 100 to be purified is determined —⌐ **S603**

↓

an angle between a first straight line formed by the image acquisition device 300 and a corner point and a vertical line to which the image acquisition device 300 corresponds is determined —⌐ **S604**

↓

the first distance between the floor position point and the corner point is obtained based on the first height and the angle —⌐ **S605**

↓

a second distance between every two corner points is determined —⌐ **S606**

↓

the space capacity information of the room 100 to be purified is determined based on the first distance and the second distance —⌐ **S607**

↓

air purification for the room 100 to be purified is performed by using a purification strategy corresponding to the space capacity information —⌐ **S608**

**FIG. 6**

**FIG. 7**

an image of a room 100 to be purified is obtained by communicating with an apparatus including an image acquisition device and installation position of the distance measuring device 400 in the air purifier 200 is determined ⌐ **S801**

↓

the image is identified to determine corner points of the room 100 to be purified ⌐ **S802**

↓

a second height of the distance measuring device 400 from the floor of the room 100 to be purified is determined ⌐ **S803**

↓

a distance regarding a corner point between the distance measuring device 400 and the corner point is obtained by the distance measuring device 400 ⌐ **S804**

↓

a first distance between the floor position point and the corner point is obtained based on the second height and the distance regarding the corner point ⌐ **S805**

↓

a second distance between every two corner points is determined ⌐ **S806**

↓

the space capacity information of the room 100 to be purified is determined based on the first distance and the second distance ⌐ **S807**

↓

the air purification of the room 100 to be purified is performed using a purification strategy corresponding to the space capacity information ⌐ **S808**

**FIG. 8**

710

Acquisition module

720

Determination module

730

Purification module

**FIG. 9**

710

Acquisition module

711

First acquisition module

720

Determination module

721

Identification module

722

Determination sub-module

7221

First distance determination unit

7222

Second distance determination unit

7223

Capacity determination unit

730

Purification module

**FIG. 10**

**FIG. 11**

**FIG. 12**

**EP 3 327 363 B1**

**REFERENCES CITED IN THE DESCRIPTION**

**Patent documents cited in the description**

- JP 2008261567 B